Europäisches Patentamt

European Patent Office

Office européen des brevets

(11) Veröffentlichungsnummer: **0 278 336 B1**

(12) **EUROPÄISCHE PATENTSCHRIFT**

(45) Veröffentlichungstag der Patentschrift: **11.12.91**

(51) Int. Cl.5: **C08L 33/26**, D21H 17/45, C02F 1/56, //(C08L33/26,77:00, 79:02)

(21) Anmeldenummer: **88101290.0**

(22) Anmeldetag: **29.01.88**

Die Akte enthält technische Angaben, die nach dem Eingang der Anmeldung eingereicht wurden und die nicht in dieser Patentschrift enthalten sind.

(54) **Neue Mittel für die Papierherstellung.**

(30) Priorität: **11.02.87 DE 3704173**

(43) Veröffentlichungstag der Anmeldung:
**17.08.88 Patentblatt 88/33**

(45) Bekanntmachung des Hinweises auf die Patenterteilung:
**11.12.91 Patentblatt 91/50**

(84) Benannte Vertragsstaaten:
**AT BE CH DE ES FR GB IT LI NL SE**

(56) Entgegenhaltungen:
**DE-A- 2 552 014**

(73) Patentinhaber: **Wolff Walsrode Aktiengesellschaft**
**Postfach**
**W-3030 Walsrode 1(DE)**

(72) Erfinder: **Behn, Rudolf**
**Birkenweg 18**
**W-3030 Walsrode(DE)**
Erfinder: **Böhmer, Branislav, Dr.**
**Moorstrasse 45**
**W-3030 Walsrode(DE)**
Erfinder: **Hoppe, Lutz, Dr.**
**Am Badeteich 8**
**W-3030 Walsrode(DE)**
Erfinder: **Szablikowski, Klaus, Dr.**
**Claudiusstrasse 5**
**W-3030 Walsrode(DE)**

(74) Vertreter: **Zobel, Manfred, Dr. et al**
**c/o BAYER AG Konzernverwaltung RP Patentabteilung Bayerwerk**
**W-5090 Leverkusen(DE)**

EP 0 278 336 B1

**Beschreibung**

Die vorliegende Erfindung betrifft neue Mittel zur Erhöhung der Retention von Fasern, Füllstoffen und Pigmenten sowie zur Beschleunigung der Entwässerung bei der Papierherstellung und als Flockungsmittel bei der Aufbereitung von Abwässern der Papierherstellung.

Additions- und Kondensationsprodukte auf der Basis Polyethylenimin, Polyamin, Polyamidamin und deren Modifikationen mit aminischen Vorprodukten, mit aufgepropftem Ethylenimin und Vernetzerbausteinen sind z.B. in DE-AS 1 546 290, DE-AS 18 02 435, US-PS 35 75 797, DE-OS 2 162 567, DE-AS 2 127 082, DE-OS 2 255 586, DE-OS 2 244 513, DE-OS 2 434 816, DE-OS 2 515 760, DE-OS 2 436 386, DE-PS 1 771 814, FR-PS 2 094 645, DE-PS 2 353 430, DE-PS 2 502 874, DE-PS 2 538 745, EP-PS 0 000 714, EP-PS 0 033 104, EP-PS 0 025 515, EP-PS 0 002 474, EP-PS 0 074 558, DE-OS 3 137 040, DE-OS 3 413 567 und DE-OS 3 421 557 beschrieben.

Obwohl den in den obengenannten Veröffentlichungen beschriebenen Kondensationsprodukten eine gute bis sehr gute Entwässerungsbeschleunigung und eine deutlich verbesserte Retention von Füllstoffen, Pigmenten und Feinfasern bei gleichzeitiger Entlastung des Wasserkreislaufes bzw. des anfallenden Abwassers bei der Papierherstellung attestiert wird, weisen die Ergebnisse aus der Praxis auf Schwächen dieser Produkte in der Retention hin.

In vielen Papierfabrikationen wird versucht, dieses Manko an Retention durch Einsatz von Produkten aus einer anderen Produktklasse zu beheben.

So sind z.B. aus der DE-A 30 27 126, DE-A 35 29 585, EP-A-O 068 225 und EP-A-O 176 757 kationische Polyacrylamide bekannt, die bei der Papierherstellung vor allem dort eingesetzt werden, wo Feinfasern, Füllstoffe und/oder Pigmente retendiert werden müssen. Solche Mittel sind allgemein als Flockungsmittel bekannt. Aufgrund ihrer hohen Molekulargewichte zeigen sie bei der Papierherstellung oft eine störende, zu hohe Füll-und Feinstoffretention. Das Ergebnis ist dann eine zu geringe Opazität, eine zu hohe Wolkigkeit (Durchsicht), Verschlechterung der Blattformation und oft zu geringe Festigkeiten des gebildeten Papierblattes. Die kationischen Polyacrylamide werden vorwiegend in der Pulver- oder Emulsionsform verwendet. Wenige kationische Polyacrylamide werden auch in verdünnten Lösungen angeboten.

Ein Nachteil der kationischen Polyacrylamid-Produkte in Pulver- oder Emulsionsform bei dem Einsatz in der Praxis ist der hohe technische Aufwand, der betrieben werden muß, wenn solche Produkte beherrschbar der Papiermasse zugefügt werden sollen.

Aus der US-A 3 323 979, EP-A 0 155 503, DE-A 2 098 664, DE-A 2 054 523, DE-A 2 156 858 sind kationische Polyacrylamid-Produkte in der Lösungsform bekannt, die z.B. nach der bekannten Mannich-Base-Reaktion aus den Polyacrylamiden hergestellt und in der Papierindustrie eingesetzt werden. Eine gewünschte Steigerung der Entwässerungsleistung und gleichzeitig der Retention unter spezifischen Bedingungen bei der Papierherstellung läßt sich auch hiermit mit bekannten Mitteln nur schwer erreichen.

Eine Abhilfe haben die sogenannten Dual-Systeme herbeigeführt. Solche Systeme, die nicht nur in der Fachliteratur, wie z.B. in "Das Papier" , 32 (1978), Heft 10 A, ab S. V 25, beschrieben, sondern auch in der Praxis angewandt werden, gehen von zwei Produkten aus, die unterschiedliche, entgegengesetzte ionische Ladungen aufweisen. Es werden nichtionogene, überwiegend aber anionaktie hochmolekulare Polyacrylamide mit kationenaktiven Polyethylenaminen oder Polyaminoamiden verwendet.

Der Einsatz von zwei unterschiedlichen Produkten für die Lagerung, für die Handhabung, für die Aufbereitung und Dosierung an der Papiermaschine bedarf eines gewissen Aufwandes. Die Dosierung der beiden Produkte bei der Papierherstellung muß genau aufeinander abgestimmt werden. Damit durch die unterschiedliche ionische Ladung der genannten Produkte keine frühzeitige Ladungsneutralisation schon vor der Blattbildung eintreten kann, die zu verminderter Wirksamkeit führt, muß eine Über- oder Unterdosierung vermieden werden.

Außberdem müssen die obengenannten Produkte dem Papierstoff getrennt zugesetzt werden, da eine Kombination zu instabilen Lösungen führt. Nach er Vermischung der kationaktiven und anionaktiven Produkte treten durch die Unverträglichkeit und den Ladungsausgleich Phasentrennung, Trübung, Ausfällungen oder Gelbildung auf, die den gemeinsamen Einsatz verhindern.

Als Alternative zu den Dual-Systemen könnte die Verwendung von kationischen Polyacrylamiden und kationischen Polyethyleniminen und/oder Polyaminoamiden überlegt werden. Diese Kombination der Produkte wurde aber in der Fachliteratur z.B. in "Wochenblatt für Papierfabrikation" 11/12 (1977), ab S. 397, als wenig wirksam bezeichnet und deshalb nicht empfohlen.

2

In der DE-A 2 552 014 werden Wasser-in -Öl-Dispersionen beschrieben, die kaitonische Copolymere aus Acrylamid und Estern aus Acrylasäure und Aminoalkoholen und Polyalkyleniminen, Alkylenimin-Epichlorhydrin-Harze, Polyamidamine oder Umsetzungsprodukte aus Alkyleniminen mit Aminopolyamiden enthalten und zur Papierherstellung eingesetzt werden.

Der Erfindung lag die Aufgabe zugrunde, eine erhöhte und vor allem steuerbare Retention bei guter Entwässerungsleistung bei der Papierherstellung zu gewährleisten.

Es war weiter Aufgabe der Erfindung, ein Mittel zu schaffen, das in der Handhabung einfach (ohne hohen technischen Aufwand) ist.

Ebenfalls war es Aufgabe der Erfindung, ein Produkt zu schaffen, daß in einer stabilen wäßrigen Lösungsform vorliegt und somit keine Belastung des Wasserkreislaufs einer Papierfabrik mit zusätzlichen Substanzen wie z.B. Emulgierstoffe, Kohlenwasserstoffverbindungen, Formaldehyd oder ungebundene Amine verursacht.

Es wurd nun ein Mittel für die Papierherstellung gefunden, welches ein kationisches Polyacrylamid C und wenigstens ein weiteres Polymer enthält. Erfindungsgemäß enthält dieses Mittel, bezogen auf Polymergehalt:

A) wenigstens ein Polyamidamin, vorzugweise zu 25 bis 90, insbesondere zu 50 bis 90 Gew.-% und/oder

B) wenigstens ein Polyamin, insbesondere Polyethylenimin, vorzugsweise zu 25 bis 90, insbesondere zu 50 bis 90 Gew.-% und

C) wenigstens ein kationisches Polyacrylamid, vorzugsweise zu 10 bis 75, insbesondere 10 bis 50 Gew.-%, welches wiederkehrende Dimethylaminopropylacrylamideinheiten, die gegebenenfalls quaternisiert sein können, aufweist, wobei vorzugsweise 40 bis 98, insbesondere 70 bis 95 Gew.-% Acrylamideinheiten und 2 bis 60, insbesondere 5 bis 30 Gew.-% Dimethylaminopropylacrylamideinheiten bevorzugt sind.

Das kationische Polyacrylamid C) kann gegebenenfalls zusätzlich andere wiederkehrende Einheiten aufweisen, insbesondere kationische Acrylamidester, die gegebenenfalls quaternisiert sein können.

In einer besonderes bevorzugten Ausführungsform besteht das Mittel aus den oben angegebenen Polymeren, so daß sich die Prozentangaben jeweils zu 100 % ergänzen.

Das erfindungsgemäße Mittel wird vorzugsweise in wasserlöslicher Form verwendet.

Unter Polyamidaminen werden für die Zwecke der vorliegenden Erfindung vorzugsweise Verbindungen verstanden, die durch Vernetzung von Polykondesaten erhalten werden. Die Polykondensate enthalten Amid und Aminogruppen und werden erhalten aus Polyalkylenpolyaminen, aliphatischen Dicarbonsäuren und gegebenenfalls zusätzlich Caprolactam. Zur Vernetzung können die üblichen polyfunktionellen Verbindungen wie z.B. Epichlorhydrin und Dichlorethan verwedet werden.

Es ist ferner möglich, die Polykondensate vor der Vernetzung mit Reaktionsprodukten aus Epichlorhydrin und Trimethylamin (DE-PS 2 353 430), Epichlorhydrin, Dimethylamin und Polyalkylenpolyamin (DE-PS 2 502 874) und Ethylenimin (DE-AS 1 802 435) zu modifizieren. Unter diese Produktgruppe fallen auch mit Ethylenimin oder einer aminhaltigen Verbindung modifizierte Polyamidamine, die mit einem Umsetzungsprodukt aus Ethylenglykolether und Epihalogenhydrin vernetzt werden (DE-AS 2 434 816).

Besonders bevorzugt Polyamidamine sind beispielsweise aus der EP-A-0 000 714 bekannte Polyethylenglykol-Polyaminoamid-Kondensationsprodukte.

Unter Polyaminen werden vorzugsweise Verbindungen verstanden, die durch Umsetzung von Polyalkylenpolyaminen, welche gegebenenfalls quaternisiert sein können (EP-PS 0 005 241) mit gegenüber Aminen bifunktionellen Verbindungen erhalten werden (DE-OS 2 244 513, GB-PS 775.721, EP-PS 0 003 499) unter Erhalt der Aminfunktion.

Ganz besonders bevorzugte Polyamine lassen sich herstellen gemäß DE-A-2 351 754, DE-A-2 802 487 und DE-A-2 833 654.

Die Polyamine enthalten vorzugsweise keine Amid-Gruppe.

In einer weiteren ganz besonders bevorzugten Ausführungsform ist wenigstens eine der unter A oder B angegebenen Verbindungen mit einem polyfunktionellen Vernetzer vernetzt. Besonders geeignete derartige Vernetzer sind bekannt als Dihalogenalkyle, z.B. Dichlorethan, Glycidylverbindungen, z.B. Diglycidylphthalat, Halogenalkylepoxide, z.B. Epichlorhydrin.

In einer bevorzugten Ausführungsform beträgt der Anteil der unter A bis C angegebenen Polymeren bezogen auf das gesamte Mittel wenigstens 1 Gew.-%, vorzugsweise 1 bis 25, insbesondere 1 bis 15 Gew.-%.

Bei dem erfindungsgemäßen Mittelhandelt es sich vorzugsweise um eine wäßrige Lösung.

In einer bevorzugten Ausführungsform handelt es sich bei dem erfindungsgemäßen Mittel um eine wäßrige, homogene und lagerstabile Polymerlösung, die bei 20°C eine Viskosität von 300 bis 10 000 mPa.s und einen pH-Wert von 4 bis 9 aufweist.

3

Gegenstand der Erfindung ist weiterhin die Verwendung der neuen Mittel zur Erhöhung der Retention von Füllstoffen, Pigmenten und Fasern sowie zur Beschleunigung der Entwässerung bei der Papierherstellung und als Flockungsmittel bei der Aufarbeitung von Abwässern der Papierherstellung durch Sedimentation, Flotation und Filtration.

Besonders bevorzugte Polyamidamine und Polyamine sind:

A1 gemäß Beispiel 1 der EP-PS 0 000 714 ( = US-PS 4 267 059)

A2 gemäß Beispiel 1 der DE-PS 23 53 430 ( = US-PS 4 052 259

A3 gemäß Beispiel 1 der DE-PS 25 02 874 ( = US-PS 4 093 605)

A4 gemäß Beispiel 2 der DE-AS 2 434 816

A5 gemäß Beispiel IIa der DE-A-28 02 487

A6 Polyamin 1 gemäß EP-A 2474,

Die Herstellung der erfindungsgemäßen Produkte erfolgt vorzugsweise so, daß zu dem unter C genannten kationischen Acrylamid in wäßriger Lösungsform eine ebenfalls wäßrige Lösung der unter A und/oder B genannten Verbindungen zugestetzt wird. Diese "Homogenisierphase" kann durch Temperatureinwirkung und scherende Aggregate unterstützt werden. Über die Zugabegeschwindigkeit der Produkte A und/oder B kann die Homogenisierphase beeinflußt werden. Anschließend wird der pH-Wert der Lösung mit einer anorganischen oder organischen Säure eingestellt. Er soll im Bereich von 4 bis 9, vorzugsweise von 5 bis 7 liegen.

Wenn in den Produkten A und/oder B das bifunktionelle Vernetzungsmittel noch nicht vollständig umgesetzt worden ist, ist eine Reaktion zwischen A und/oder B und C über dieses Vernetzungsmitttel möglich.

Das neue, überraschend homogene Produkt, das eine ausgezeichnete Stabilität aufweist, erbringt besonders beim Einsatz bei der Herstellung von Papieren mit hohen Anteilen an Recycling-Rohstoffen und/oder Füllstoffen (wie z.B. Kaolin oder Calciumcarbonat) völlig unerwartet deutlich verbesserte Retentions- und Entwässerungswerte.

Beispiel 1

Ein temperierbarer Behälter, ausgerüstet mit einem Propeller-Rührer, wird mit 4.020 g Wasser gefüllt und auf 40°C erwärmt.

Es werden 100 g eines kationischen Polyacrylamid-Granulates C, welches 10 Gew.-Teile Dimethylaminopropylamid enthält über einen Trockengut-Dosierer in die Wasservorlage gleichmäßig eindosiert und bis zur vollständigen Auflösung gerührt.

Zu dieser Polyacrylamid-Lösung werden 800 g einer 25 gew.-%igen Polyamidamin-Lösung A gemäß Beispiel 1 der EP-PS 0 00 714 innerhalb von ca. 30 min kontinuierlich zudosiert und 1 Stunde unter weiterem Rühren homogenisiert. Der pH-Wert der entstandenen Polymerlösung wird mit konzentrierter Ameisensäure auf 6,4 eingestellt und bei ständigem Rühren auf Faumtemperatur abgekühlt. Das Endprodukt hat eine Viskosität von 3.200 mPa.s (Rotovisko Haake, 20°C, D = 2,55 sec$^{-1}$).

Die so erhaltene erfindungsgemäße kationische Polymerlösung bleibt selbst nach 12 Wochen Lagerung eine homogene und lagerstabile Lösung (kein Viskositätsanstieg, keine Phasenbildung, keine Ausfällungen).

Beispiel 2 bis 16

Es wird gemäß Beispiel 1 verfahren, wobei die in Tabelle 1 angegebenen Substanzen in den dort angegebenen Mengen verwendet werden. In Beispiel 6 wurde das Dimethylaminopropylacrylamid mit Chlormethyl quarternisiert eingesetzt (Anteil der kationischen Verbindung: 25 Gew.-Teile). Die Herstellung erfolgt analog Beispiel 1.

In Tabelle 2 sind die Viskositäten als Maß für die Lagerstabilität und die Phasen/Gelbildung als Maß für die Unverträglichkeit und die Homogenität der Lösung als Maß für die Verträglichkeit der eingesetzten kationischen Polymerlösungen nach den Beispielen 1 bis 13 dargestellt.

Die folgenden Anwendungsbeispiele sollen dazu dienen, die verbesserte Flock- und Retentionswirkung bei guter Entwässerungsbeschleunigung der erfindungsgemäß hergestellten kationsichen Polymerlösungen im Vergleich zu bekannten Produkten darzustellen.

Die Konzentration der in den Anwendungsbeispielen eingesetzten Polymerlösungen ist in Tabelle 3 aufgeführt.

**Tabelle 1**  Zusammensetzung und Herstellbedingungen der kationischen Polymerlösungen

| Bsp. | Polyacryl-amid gemäß Anmeldung oder Han-delspro-dukt | Anteil kationi-scher Monomere (Gew.-%) | Einsatz-menge Poly-amid-Granulat (g) | Wasser-menge (g) | Polyamidamin/Poly-amin Nr. | Menge (g) | Herstellbe-dingungen Löse- und Homogenisie-rungstempera-tur (°C) | Viskosität (mPa.s) | pH-Wert |
|---|---|---|---|---|---|---|---|---|---|
| 1 | P 35 44 909.8 | 10 | 100 | 4.020 | A1 | 880 | 40 | 3.200 | 6,4 |
| 2 | P 35 44 909.8 | 10 | 100 | 3.230 | A1 | 1.670 | 30 | 3.500 | 5,9 |
| 3 | P 35 44 909.8 | 45 | 100 | 3230 | A1 | 1.670 | 20 | 874 | 6,3 |
| 4 | P 35 44 909.8 | 5 | 100 | 4.020 | A1 | 880 | 30 | 3.150 | 6,5 |
| 5 | P 35 44 909.8 | 15 | 100 | 3.230 | A1 | 1.670 | 25 | 2.849 | 6,3 |
| 6 | P 35 44 909.8 | 25 | 100 | 4.020 | A1 | 880 | 30 | 1.112 | 6,6 |
| 7 | P 35 44 909.8 | 10 | 100 | 4.020 | A2 | 880 | 30 | 3.076 | 5,8 |
| 8 | P 35 44 909.8 | 10 | 100 | 4.020 | A3 | 880 | 30 | 3.237 | 6,2 |
| 9 | P 35 44 909.8 | 10 | 100 | 3.230 | A4 | 1.670 | 30 | 3.312 | 6,4 |
| 10 | P 35 44 909.8 | 10 | 100 | 3.230 | A5 | 1.670 | 30 | 3.294 | 6,2 |
| 11 | P 35 44 909.8 | 10 | 100 | 3.230 | A6 | 1.670 | 30 | 3.391 | 6,3 |
| 13* | Praestol 322K® | | 100 | 4.020 | A1 | 880 | 30 | 407 | 6,2 |
| 14* | Praestol 333K® | | 100 | 3.230 | A1 | 1.670 | 30 | 487 | 6,3 |
| 15* | Sursolan K 12 L® | | Es wurden verwen-det 3.330 g 3 %ige Lösung | | A1 | 1.670 | 30 | 190 | 6,4 |
| 16* | Separan CP 35® | | Es wurden verwen-det 3.330 g 3 %ige Lösung | | A1 | 1.670 | 30 | 1.300 | 6,5 |

Praestol® = eingetragenes Warenzeichen der Fa. Stockhausen
Sursolan® = eingetragenes Warenzeichen der Fa. BASF
Separan® = eingetragenes Warenzeichen der Fa. Dow Chem.

\* Vergleichsbeispiel

EP 0 278 336 B1

Tabelle 2 Lagerstabilität und Verträglichkeit der kationischen Polymerlösungen

| Bsp. | nach 1 Woche Lagerung (20°C) Aussehen und Zustand | Viskosität | nach 12 Wochen Lagerung (20°C) Aussehen und Zustand | Viskosität |
|---|---|---|---|---|
| 1 | fast farblose und homogene Lösung (keine Phasenbildung) | 3.200 | fast farblose und homogene Lösung (keine Phasenbildung) | 3.109 |
| 2 | " | 3.495 | " | 3.410 |
| 3 | " | 869 | " | 831 |
| 4 | " | 3.145 | " | 3.028 |
| 5 | " | 2.841 | " | 2.831 |
| 6 | " | 1.098 | " | 1.040 |
| 7 | " | 3.078 | " | 3.001 |
| 8 | " | 3.212 | " | 3.129 |
| 9 | " | 3.304 | " | 3.208 |
| 10 | hellbraune und homogene Lösung | 3.284 | hellbraune und homogene Lösung | 3.146 |
| 11 | braune und homogene Lösung | 3.375 | braune und homogene Lösung | 3.258 |
| 13* | Bodensatz und Phasenbildung | nicht meßbar | Bodensatz und Phasenbildung | nicht meßbar |
| 14* | Bodensatz und Phasenbildung | nicht meßbar | Bodensatz und Phasenbildung | nicht meßbar |
| 15* | Bodensatz und Phasenbildung | nicht meßbar | Bodensatz und Phasenbildung | nicht meßbar |
| 16* | Gelbildung | nicht meßbar | Gelbildung | nicht meßbar |

* Vergleichsbeispiel

Bestimmung der Flockwirkung

Um die Flockwirkung der Produkte, die nach den erfindungsgemäßen Beispielen 1 bis 12 hergestellt und in den Vergleichsbeispielen eingesetzten Handelsprodukte zu bestimmen, wurde Kaolin (Fa. W. Prim, Bielefeld, Type 23/163), das dem Fachmann als Füllmittel bei der Papieraufbereitung bekannt ist, verwendet (siehe Tabelle 3) und daraus eine Suspension in Wasser hergestellt. Diese Kaolin-Suspension wurde benutzt, weil sie in ihren Eigenschaften einer Papierstoff-/Abwasser-Suspension nahe kommt.

Die Kaolin-Suspension wurde in einem Schüttelzylinder mit einem Fassungsvermögen von 500 ml und einem Innendurchmesser von 45 mm durch Schütteln von 15 g Kaolin/1 Wasser und Einstellung des pH-Wertes mit Salzsäure auf 6.5 hergestellt. Zu dieser Suspension wurden 0,1 Gew;-% bzw. 0,2 Gew.-% (bezogen auf Kaolin-Festsubstanz) der verschiedenen Retentionsmittel-Lösungen zugesetzt. Der Zylinder wurde 6 mal geschüttelt und nach einer Sedimentations- bzw. Flockzeit von 1 Minute, die im Meßzylinder erkennbare Absatzhöhe des ausgeflockten Kaolins in ml abgelesen.

Ein Flockungsmittel ist umso wirksamer, je niedriger die Absatzhöhe in ml einerseits und je klarer die Wasserzone über dem ausgeflockten Kaolin ist.

Deshalb wurde nach 2 Minuten Ruhephase der Trübungsgrad der über dem ausgeflockten Teil befindlichen Wasserzone in Abstufungen trübe, gering trübe und klar visuell beurteilt.

In den Vergleichsbeispielen wurde als Retentionsmittel verwendet:

| Vergleichsbeispiel | Zusammensetzung |
| --- | --- |
| V0 | kein Retentionsmittel |
| V1 | gemäß Beispiel 1 der DE-PS 23 53 430 |
| V2 | gemäß Beispiel 1 der DE-PS 25 02 874 |
| V3 | gemäß Beispiel 1 der EP-PS 0 000 714 |
| V4 | gemäß Beispiel 2 der DE-AS 2 434 816 |
| V5 | gemäß Beispiel IIa der DE-A-2 802 487 |
| V6 | gemäß Polyamin 1 der EP-A-2 474 |

In Tabelle 3 sind die Auswertungen zusammengefaßt.

Bestimmung der Füllstoffretention

Die Charakterisierung der Füllstoffretention erfolgt durch die Bestimmung des Aschegehaltes von Papierblättern, die mit dem Rapid-Köthen-Gerät entsprechend dem Merkblatt V/8/57 des Vereins der

**Tabelle 3**
Bestimmung der Ausflockungseigenschaften einer wäßrigen Feststoffsuspension (15 g Kaolin/1 Wasser)

| Beispiel | Konzentration der Polymerlösungen und der Vergleichsprodukte (Gew.-%) | Ausflockhöhe des Kaolin nach 1 Min. Sedimentationszeit in (ml) bei einer Retentionsmittelzugabe von | | Visuelle Beurteilung der Klarzone des Wassers über dem ausgeflockten Kaolin nach 2 Min. Sedimentationszeit. (Die Zahlen bedeuten Retentionsmittelzugabe in Gew.-%) | | |
|---|---|---|---|---|---|---|
| | | 0,10 Gew.-% | 0,20 Gew.-% | trübe | gering trübe | klar |
| 1 | 6 | 130 | 85 | – | 0,10 | 0,20 |
| 2 | 10 | 190 | 105 | – | 0,10 | 0,20 |
| 3 | 10 | 196 | 114 | – | 0,10 | 0,20 |
| 4 | 6 | 148 | 102 | – | 0,10 | 0,20 |
| 5 | 10 | 187 | 103 | – | 0,10 | 0,20 |
| 6 | 6 | 123 | 81 | – | 0,10 | 0,20 |
| 7 | 6 | 133 | 89 | – | 0,10 | 0,20 |
| 8 | 6 | 132 | 86 | – | 0,10 | 0,20 |
| 9 | 10 | 199 | 118 | – | 0,10 | 0,20 |
| 10 | 10 | 201 | 119 | – | 0,10 | 0,20 |
| 11 | 10 | 197 | 115 | – | 0,10 | 0,20 |
| V0 | | 450 | | trübe | | |
| V1 | 25 | 302 | 227 | 0,10 | 0,20 | – |
| V2 | 25 | 307 | 231 | 0,10 | 0,20 | – |
| V3 | 24 | 296 | 221 | 0,10 | 0,20 | – |
| V4 | 24 | 310 | 242 | 0,10 | 0,20 | – |
| V5 | 35 | 311 | 244 | 0,10 | 0,20 | – |
| V6 | 34 | 305 | 228 | 0,10 | 0,20 | – |

Zellstoff- und Papierchemiker und Ingenieure (alte Fassung Merkblatt 108) hergestellt wurden.

Die verwendeten Papierblätter hatten folgende Zusammensetzung:

80 % gebleichter Sulfitzellstoff 27 ° SR)

15 % China-Clay

5 % Titandioxid.

Der pH-Wert der eingesetzten Papierstoff-Suspension wurde mit Alaun auf 6,5 eingestellt. Der FaserstoffSuspension wurde in allen Beispielen eine Retentionsmittelmenge von 0,20 Gew.-% der in Tabelle 3 angegebenen Lösungen (bezogen auf atro Papierfaserstoff) zugesetzt.

Die aus den hergestellten Papierblättern ermittelten Aschegehalte sind in Tabelle 4 dargestellt.

## Tabelle 4

### Füllstoffretention

| Beispiel | Aschegehalt (Gew.-%) |
|----------|----------------------|
| 1  | 10,8 |
| 2  | 9,9  |
| 3  | 9,6  |
| 4  | 10,2 |
| 5  | 9,8  |
| 6  | 10,4 |
| 7  | 10,5 |
| 8  | 10,6 |
| 9  | 9,5  |
| 10 | 9,4  |
| 11 | 9,6  |
| **Vergleichsbeispiel** | |
| V0 | 6,1  |
| V1 | 7,5  |
| V2 | 7,6  |
| V3 | 8,1  |
| V4 | 7,4  |
| V5 | 7,5  |
| V6 | 7,9  |

Bestimmung der Entwässerung

Die Mahlgradsenkung in °SR ist ein Maß für die Entwässerung einer Faserstoff-Suspension. Sie wird nach der Vorschrift des Merkblattes 107 des Vereins der Zellstoffund Papierchemiker und Ingenieure ermittelt. Sowohl die erfindungsgemäßen wie auch die Vergleichsprodukte werden als Retentionsmittel in Form ihrer wäßrigen Lösung (Konzentrationsangaben siehe Tabelle 5) einer Zeitungspapierstoff-Suspension zugesetzt. Die Faserstoff-Konzentration beträgt 2 g/l. Die Zugabemenge an Retentionsmittel beträgt 0,1 und 0,3 Gew.-%, bezogen auf atro Papier.

Die Zeitungspapierstoff-Suspension wird durch mechanische Zerfaserung handelsüblichen Zeitungspapieres und anschließendes stippenfreies Aufschlagen des zerfaserten Produktes in einem Aufschlaggerät (Type Mark 3, Fa. Gockel & Co. GmbH, München) erhalten. Für die Messungen wird der pH-Wert auf 6,5 bzw. 4,8 mit einer 1 gew.-%igen Lösung aus Schwefelsäure/Aluminiumsulfat (Gewichtsverhältnis 1:1) eingestellt.

EP 0 278 336 B1

## Tabelle 5

Bestimmung der Entwässerung einer Zeitungspapier-Suspension durch Mahlgradsenkung in °SR

| Beispiel | Mahlgrade in °SR bei einer Zugabe von Polymerlösung in Gew.-% | | | |
| --- | --- | --- | --- | --- |
| | 0,1 | 0,3 | 0,1 | 0,3 |
| | bei pH 6,5 | | bei pH 4,8 | |
| 1 | 34 | 24 | 39 | 28 |
| 2 | 32 | 23 | 33 | 25 |
| 3 | 33 | 23 | 34 | 26 |
| 4 | 36 | 26 | 40 | 30 |
| 5 | 32 | 22 | 32 | 24 |
| 6 | 33 | 23 | 39 | 29 |
| 7 | 35 | 25 | 40 | 31 |
| 8 | 35 | 26 | 41 | 30 |
| 9 | 34 | 25 | 40 | 32 |
| 10 | 34 | 24 | 40 | 31 |
| 11 | 33 | 22 | 39 | 29 |
| Vergleichsbeispiel | | | | |
| V1 | 38 | 28 | 45 | 39 |
| V2 | 38 | 28 | 46 | 40 |
| V3 | 37 | 27 | 42 | 36 |
| V4 | 37 | 27 | 45 | 40 |
| V5 | 38 | 29 | 46 | 41 |
| V6 | 36 | 27 | 47 | 42 |
| V0 | 59 | | 63 | |

## Patentansprüche

1. Für die Papierherstellung geeignetes Mittel enthaltend ein Kationisches Polyacrylamid C und wenigstens ein weiteres Polymer, dadurch gekennzeichnet, daß es enthält:

    A) wenigstens ein Polyamidamin und/oder

    B) wenigstens ein Polyamin und daß

    C) wenigstens ein kationisches Polyacrylamid welches wiederkehrende Dimethylaminopropylacrylamideinheiten, die gegebenenfalls quaternisiert sein können, aufweist.

2. Mittel nach Anspruch 1, gekennzeichnet durch den Gehalt an

A) 25 bis 90 Gew.-%, bezogen auf Polymergehalt, wenigstens eines Polyamidamines und/oder
B) 25 bis 90 Gew.-%, bezogen auf Polymergehalt, wenigstens eines Polyamins und
C) 10 bis 75 Gew.-%, bezogen auf Polymergehalt, wenigstens eines kationischen Polyacrylamids, welches 40 bis 98 Gew.-% Acrylamid und 2 bis 60 Gew.-% Dimethylaminopropylacrylamid oder dessen Quaternisierungsprodukt enthält.

3. Mittel nach wenigstens einem der vorhergehenden Ansprüche, dadurch gekennzeichnet, daß das Polyamidamin A) erhalten wird durch die Vernetzung mit polyfunktionellen Verbindungen von Polykondensationsprodukten aus Polyalkylenpolyaminen, aliphatischen Dicaronsäuren und gegebenenfalls Caprolactam.

4. Mittel nach Anspruch 1, dadurch gekennzeichnet, daß das Polyamin durch Umsetzung von Polyalkylenpolyaminen, welche gegebenenfalls quaternisiert sein können, mit gegenüber Aminen bifunktionellen Verbindungen erhalten wird.

5. Mittel nach wenigstens einem der vorhergehenden Ansprüche, dadurch gekennzeichnet, daß das Polyamidamin A mit Ethylenimin oder einer aminhaltigen Verbindung modifiziert ist.

6. Mittel nach wenigstens einem der vorhergehenden Ansprüche, dadurch gekennzeichnet, daß wenigstens eine der Komponenten A und B mit einem Vernetzer vernetzt ist.

7. Mittel nach wenigstens einem der vorhergehenden Ansprüche, dadurch gekennzeichnet, daß der Gehalt der Polymeren A bis C wenigstens 1 Gew.-% bezogen auf das Gesamtgewicht des Mittels beträgt.

8. Mittel nach wenigstens einem der vorhergehenden Ansprüche, dadurch gekennzeichnet, daß es sich um eine wäßrige, homogene, lagerstabile Lösung handelt.

9. Mittel nach Anspruch 8, dadurch gekennzeichnet, daß die Lösung bei 20°C eine Viskosität von 300 bis 10 000 mPa.s und einen pH-Wert von 4 bis 9 aufweisen.

10. Verwendung des Mittels nach wenigstens einem der vorhergehenden Ansprüche bei der Papierherstellung und bei der Aufarbeitung von Abwässern.

## Claims

1. A composition suitable for paper manufacture containing a cationic polyacrylamide C and at least one other polymer, characterized in that it contains

A) at least one polyamidoamine and/or
B) at least one polyamine and
C) at least one cationic polyacrylamide containing recurring dimethylaminopropyl acrylamide units which may optionally be quaternized.

2. A composition as claimed in claim 1, characterized by a content of

A) 25 to 90% by weight, based on the polymer content, of at least one polyamidoamine and/or
B) 25 to 90% by weight, based on the polymer content, of at least one polyamine and
C) 10 to 75% by weight, based on the polymer content, of at least one cationic polyacrylamide containing 40 to 98% by weight acrylamide and 2 to 60% by weight dimethylaminopropyl acrylamide or the quaternization product thereof.

3. A composition as claimed in at least one of the preceding claims, characterized in that the polyamidoamine A) is obtained by crosslinking of polycondensates of polyalkylene polyamines, aliphatic dicarboxylic acids and optionally caprolactam with polyfunctional compounds.

4. A composition as claimed in claim 1, characterized in that the polyamine is obtained by reaction of optionally quaternized polyalkylene polyamines with compounds having a functionality of two with respect to amines.

5. A composition as claimed in at least one of the preceding claims, characterized in that the polyamidoamine A is modified with ethylene imine or an amine-containing compound.

6. A composition as claimed in at least one of the preceding claims, characterized in that at least one of components A and B is crosslinked with a crosslinking agent.

7. A composition as claimed in at least one of the preceding claims, characterized in that the content of polymers A to C is at least 1% by weight, based on the total weight of the composition.

8. A composition as claimed in at least one of the preceding claims, characterized in that it is in the form of an aqueous, homogeneous and storable solution.

9. A composition as claimed in claim 8, characterized in that the solution has a viscosity at $20\,^{\circ}\text{C}$ of 300 to 10,000 mPa.s and a pH value of 4 to 9.

10. The use of the composition claimed in any of the preceding claims in paper manufacture and in the treatment of wastewaters.

**Revendications**

1. Agent contenant un polyacrylamide cationique C et au moins un autre polymère, convenant à la fabrication du papier, **caractérisé en ce qu'**il contient:

   A) au moins une polyamidamine et/ou
   B) au moins une polyamine, et
   C) au moins un polyacrylamide cationique qui présente des unités récurrentes de diméthylaminopropylacrylamide qui le cas échéant peuvent être quaternisées.

2. Agent selon la revendication 1, **caractérisé par**:

   A) une teneur de 25 à 90 % en poids, calculés à partir de la teneur en polymère, en au moins une polyamidamine et/ou
   B) une teneur de 25 à 90 % en poids, calculés à partir de la teneur en polymère, en au moins une polyamine, et
   C) une teneur de 10 à 75 % en poids, calculés à partir de la teneur en polymère, en au moins un polyacrylamide cationique, qui contient 40 à 98 % en poids d'acrylamide et 2 à 60 % en poids de diméthylaminopropylacrylamide ou d'un des ses produits de quaternisation.

3. Agent selon l'une des revendications précédentes, **caractérisé en ce que** la polyamidamine A) est obtenue par la réticulation avec des composés polyfonctionnels de produits de polycondensation de polyalkylènepolyamines, d'acides aliphatiques dicarboxyliques et le cas échéant de caprolatame.

4. Agent selon la revendication 1, **caractérisé en ce que** la polyamine est obtenue par réaction de polyalkylènepolyamines qui le cas échéant peuvent être quaternisées, avec des composés difonctionnels vis-à-vis des amines.

5. Agent selon l'une des revendications précédentes, **caractérisé en ce que** la polyamidamine A est modifiée par l'éthylénimine ou un autre composé aminé.

6. Agent selon l'une des revendications précédentes, **caractérisé en ce qu'**au moins un des composants A et B est réticulé au moyen d'un agent de réticulation.

7. Agent selon l'une des revendications précédentes, **caractérisé en ce que** la teneur en les polymères A à C s'élève à au moins 1 % en poids de l'agent, calculé à partir du poids total de l'agent.

8. Agent selon l'une des revendications précédentes, **caractérisé en ce qu'**il s'agit d'une solution aqueuse, homogène, stable à l'entreposage.

9. Agent selon la revendication 8, **caractérisé en ce que** la solution présente à 20°C une viscosité de 300 à 10 000 mPa.s et un pH de 4 à 9.

10. Utilisation de l'agent selon au moins l'une des revendications précédentes en fabrication de papier ou en traitement d'eaux résiduelles.